Europäisches Patentamt

European Patent Office

Office européen des brevets

(11) Veröffentlichungsnummer: **0 508 448 A2**

# EUROPÄISCHE PATENTANMELDUNG

(21) Anmeldenummer: **92106236.0**

(22) Anmeldetag: **10.04.92**

(51) Int. Cl.5: **H02H 3/14**, H02H 5/08

(30) Priorität: **10.04.91 DE 4111599**

(43) Veröffentlichungstag der Anmeldung:
**14.10.92 Patentblatt 92/42**

(84) Benannte Vertragsstaaten:
**AT CH ES FR GB GR IT LI NL SE**

(71) Anmelder: **Lauerer, Friedrich**
**Karwendelstrasse 12a**
**W-8033 Krailling(DE)**

(72) Erfinder: **Lauerer, Friedrich**
**Karwendelstrasse 12a**
**W-8033 Krailling(DE)**

(54) **Elektrische Auslöseeinrichtung.**

(57) Gegenstand der Erfindung ist eine Auslöseeinrichtung, die dann zu einer Abschaltung führt, wenn ein bestimmter Isolationswiderstand unterschritten wird. Das Haupteinsatzgebiet ist die Schutztechnik. Speziell dient die Auslöseeinrichtung für Schutzmaßnahmen gegen den Stromtod in der Badewanne, insbesondere zum Einbau in Haartrocknern.

Der Erfindungsgedanke besteht aus einer symmetrisch angeordneten Reihenschaltung von zwei Festwidwerständen (Ra, Rc) und zwei spannungsabhängigen Widerständen (Ga, Gc), die an der Stromquelle angeschlosen ist. In der Mitte der Reihenschaltung, die als Spannungsteiler wirkt, ist über eine Sonde (S) der zu überwachende Isolationswiderstand (Ris) angeschlossen. Unterschreitet der Isolationswiderstand Ris (z.B. durch Wassereinwirkung) den zulässigen Wert, dann wird eine parallel zu den Festwiderständen (Ra, Rc) liegende Relaisspule (Rs) erregt und die Relaiskontakte (Ka, Kc) schalten die Reihenschaltung und damit auch das angeschlossenen Verbrauchsgerätes ab. Wegen der Symmetrie der Reihenschaltung erfolgt die Abschaltung auch bei Steckerumkehr.

Fig. 1

Gegenstand der Erfindung ist eine Auslöseeinrichtung, die dann in Funktion tritt, wenn ein bestimmter Isolationswiderstand unterschritten wird. Das Haupteinsatzgebiet ist die Schutztechnik. Speziell dient die Auslöseeinrichtung für Schutzmaßnahmen gegen den Stromtod in der Badewanne, insbesondere zum Einbau in Haartrocknern.

Es ist bekannt, daß spannungsabhängige Widerstände zur Auslösung von Schaltern, Signalen usw. verwendet werden, wenn ein Isolationswiderstand einen bestimmten Wert unterschreitet. Die bekannte Schaltung hat zwei Nachteile:

1. Wird als Auslöseorgan ein Gleichstromrelais verwendet und wird dieses mit nicht voll geglätteter Wechselspannung gespeist, so existiert ein bestimmter Grenzbereich des Isolationswiderstandes, bei dem der durch die Relaisspule fließende Strom den Anker zwar periodisch bewegt, diesen aber nicht vollständig abhebt. Als Folge tritt ein Relaisbrummen auf, das bei Belastung zu kontaktzerstörenden Lichtbögen führen kann.

2. Sollen sehr hohe Isolationswiderstände eine Auslösung bewirken, so ist dies bei Verwendung relativ geringer Speisespannungen nur mit Hilfe komplizierter Schaltungen möglich.

Der vorliegenden Erfindung liegt die Aufgabe zugrunde, die beiden erwähnten Nachteile mit wenig Aufwand zu vermeiden.

Die Erfindung löst die gestellte Aufgabe gemäß Anspruch 1 dadurch, daß in Reihe zur Reihenschaltung aus spannungsabhängigen Widerstand und Auslöseorgan ein weiterer spannungsabhängiger Widerständ (Rc) liegt und der zu überwachende Widerstand (Ris) parallel zu einem der beiden spannungsabhängigen Widerstände geschaltet ist.

Die folgenden Unteransprüche enthalten vorteilhafte Weiterbildungen der Erfindung.

Die Erfindung wird nachstehend an Hand der in der Zeichnung dargestellten Ausführungsbeispiele erläutert.

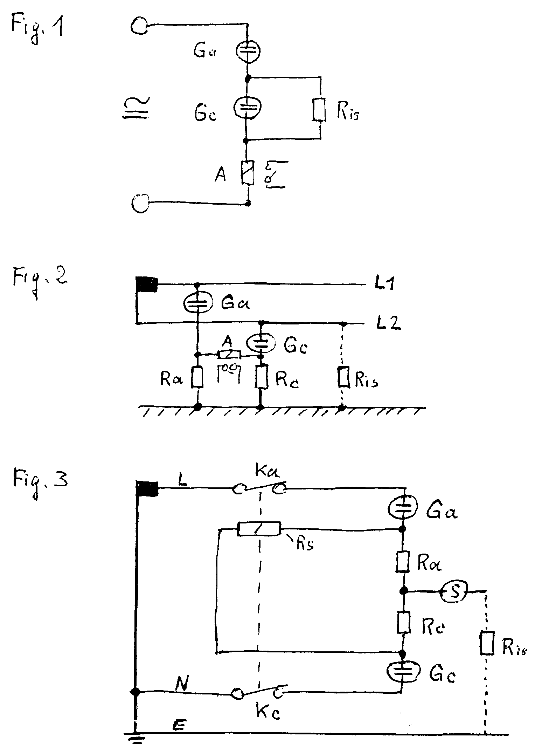

In Fig. 1 sind zwei spannungsabhängige Widerstände Ra und Rc sowie ein Auslöseorgan, hier ein Relais, hintereinandergeschaltet. Paralell zu Rc liegt der zu überwachende Isolationswiderstand Ris. Bei geeigneter Wahl der Schwellenspannung der spannungsabhängigen Widerstände erfolgt bei dem vorgesehenen Ansprech-Isolationswiderstand ein plötzlich auftretender hoher Strom durch die Relaisspule. Der Effekt ist besonders stark, wenn als spannungsabhängige Widerstände solche verwendet werden, die eine reduzierte Durchlaßspannung besitzen, wie Gasüberspannungsableiter, Diacs oder ähnliche elektronische Bauelemente. Wird die Schaltung z.B. mit 220 Volt, 50 Hz, gespeist und werden Gas-Überspannungsableiter mit einer Schwellenspannung von 230 Volt gewählt, so fließt im ungestörten Zustand praktisch kein Ruhestrom, während beim Unterschreiten des vorgesehenen Grenz-Isolationswiderstandes beide Ableiter plötzlich und nahezu gleichzeitig durchschalten mit der Folge, daß ca. 180 Volt am Relais anstehen und eine kräftige Ankerbewegung bewirken.

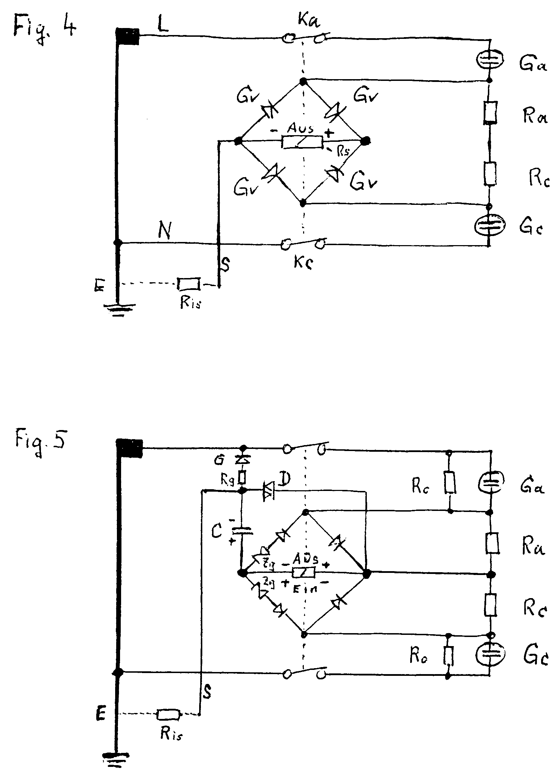

In Fig. 2 wird der Erfindungsgedanke bei der Isolationsüberwachung in einem isolierten Netz bzw. nach einem Trenntransformator angewandt. Tritt bei einem der beiden Leiter L1 oder L2 ein Erdschluß auf (Ris), so zünden beide Gas-Überspannungsableiter Ga und Gc. Da die Gas-Überspannungsableiter im ungezündeten Zustand einen Widerstand im Giga-Ohm-Bereich haben, lassen sich mit dieser einfachen Schaltung Auslösungen bei gleich hohen Isolationswiderständen realisieren. In der Praxis sind meist niedrigere Bereiche gefordert. Den gewünschten Auslösebereich erhält man dadurch, daß den Gas-Überspannungsableitern genau dimensionierte Widerstände parallel geschaltet werden, siehe Fig. 5, hier Ro. Zur Erhöhung der Funktionszuverlässigkeit, können jeweils zwei oder 3 Gas-Überspannungleiter parallel geschaltet werden.

In Fig. 3 wird der Erfindungsgedanke bei einem Elektrogerät angewandt, das bei Eindringen von Wasser abschalten soll, wie es z.b. bei einem Sicherheits-Haartrockner gefordert wird. Dringt geerdetes oder von Erde isoliertes Wasser von der Erde E zur Sonde S bzw. von der Sonde S zum Leiter N oder L, so steht zunächst an einem der beider Gas-Überspannungsableiter die volle Netzspannung an mit der Folge, daß dieser zündet. Da sich sofort die Brennspannung von ca. 20 Volt einstellt, steht nun die hohe Spannung auch am zweiten Gas-Überspannungsableiter an, was ebenfalls zur Zündung führt. Die Relaisspule Rs erhält auf diese Weise einen hohen Spannungsstoß, der zur Abschaltung führt.

In Fig. 4 ist eine ähnliche Schaltung wiedergegeben wie in Fig. 3. Hier wird allerdings ein Gleichstromrelais verwendet, das durch einen Vollweggleichrichter (Gv) gespeist wird. Weiter liegt hier die Relaisspule im Sondenstromkreis. Die Abschaltung wird bei jeder Halbwellenpolarität eingeleitet, d.h. die Abschaltzeit ist relativ kurz und liegt bei max. 15 ms.

In Fig. 5 ist eine Gesamtschaltung wiedergegeben, wie sie für einen Sicherheits-Haartrockner infrage kommt. Die Größe der Widerstände Ro bestimmt den für die Abschaltung vorgesehenen Schwellenwert des Isolationswiderstandes Ris, d.h. hier des Wasserwiderstandes und damit des Fehlerstromes.

Wenn nach einer Fehlerabschaltung das eingedrungene Wasser verdunstet ist und Ris den Schwellenwert wieder überschritten hat, erfolgt eine automatische Wiedereinschaltung auf folgende Weise:
Über den Gleichrichter G und den berührungsstrombegrenzenden Hochohmwiderstand Rg wird der Kondensator (c) aufgeladen, der sich bei Erreichen der Schwellenspannung des Spannungsschwellenwertschalters D auf die Relaisspule Rs gegenpolig entlädt und damit das Relais wieder einschaltet. Damit in der Vollweggleichrichterschaltung in dieser Polarität die Speisespannung durch die vier Gv nicht kurzgeschlossen werden kann, sind Zenerdioden Zg eingefügt, die diesen Kurzschluß verhindern.

So lange der Isolationswiderstnad Ris (Wasserwiderstand) unzulässig niedrig ist, kann keine automatische Wiedereinschaltung erfolgen, weil der Kondensator C durch Ris überbrückt ist. Auch bei Stecker-Umkehr erfolgt keine automatische Wiedereinschaltung, da dann die Reihenschaltung von G und Rg durch Ris überbrückt ist.

Da die Relaisspule Rs im Sondenstromkreis S liegt, erfolgt eine Abschaltung auch dann, wenn der Neutralleiter in der Zuleitung unterbrochen ist.

**Patentansprüche**

1. Elektrische Auslöseeinrichtung, bei der ein Auslöseorgan (A) in Reihe zu einem spannungsabhängigen Widerstand (Ga) liegt und das Auslöseorgan bei Unterschreiten eines bestimmten zu überwachenden Widerstandswertes (Ris) anspricht, dadurch gekennzeichnet, daß in Reihe zu dieser Reihenschaltung ein weiterer spannungsabhängiger Widerständ (Gc) liegt und der zu überwachenden Widerstand (Ris) parallel zu einem der beiden spannungsabhängigen Widerstände geschaltet ist.

2. Elektrische Auslöseeinrichtung nach Anspruch 1, dadurch gekennzeichnet, daß als spannungsabhängiger Widerstand ein Varistor, ein Gas-Überspannungsableiter, ein Diac oder ein ähnliches elektronisches Bauelement verwendet wird.

3. Elektrische Auslöseeinrichtung nach Anspruch 2, dadurch gekennzeichnet, daß zur Isolationsüberwachung in einem isolierten Netz von jedem Leiter (L1, L2) eine Reihenschaltung aus spannungsabhängigen Widerstand (Ga, Gc) und normalem Widerstand (Ra, Rc) zur Erde (E) führt, und das Auslöseorgang (A) parallel zu den beiden Wiederständen (Ra, Rc) liegt.

4. Elektrische Auslöseeinrichtung nach Anspruch 3, dadurch gekennzeichnet, daß die Verbindungsleitung der beiden Widerstände (Ra, Rc) nicht zur Erde, sondern zu einer Sonde (S) führt, die zur Isolationsüberwachung der Netzleiter (L, N) gegen die Erde (E) dient, d.h. wenn der zu überwachende Widerstand (Ris) den zulässigen Wert unterschreitet, schaltet das Relais (Rs, Ka, Kc) die Stromzufuhr ab.

5. Elektrische Auslöseeinrichtung nach Anspruch 4, dadurch gekennzeichnet, daß als Relais (Rs, Ka, Kc) ein allpoliges, bistabiles und gepoltes verwendet wird, welches über einen Vollweggleichrichter (Gv) gespeist wird und die Auslösung dadurch erfolgt, daß der zu überwachende Widerstand (Ris) über die Sonde mit einem Anschluß der Relaisspule (Rs) verbunden ist.

6. Elektrische Auslöseeinrichtung nach Anspruch 5, dadurch gekennzeichnet, daß zusätzlich der andere Anschluß der Relaisspule (Rs) mit der Verbindungsleitung der Widerstände Ra und Rc verbunden ist.

7. Elektrische Auslöseeinrichtung nach einem der vorhergehenden Ansprüche, dadurch gekennzeichnet, daß nach Verschwinden eines unzulässig geringen Isolationswiderstandes (Ris) eine automatische Wiedereinschaltung in der Weise erfolgt, daß über einen berührungsstrombegrenzenden Hochohmwiderstand (Rg) ein Kondensator (C) ständig aufgeladen wird, der sich bei Erreichen der Schwellenspannung des Spannungsschwellenwertschalters D auf die Relaisspule gegenpolig entlädt, wobei in der Vollweggleichrichterschaltung der in dieser Polarität sonst gegebene Kurzschluß durch Einbau von entsprechenden Spannungsschwellwertschaltern (Zg) vermieden wird.

8. Elektrische Auslöseeinrichtung nach einem der vorhergehenden Ansprüche, dadurch gekennzeichnet, daß die Auslöseeinrichtung in einem Haartrockner oder einem ähnlichen Gerät eingebaut ist und die Sonde an allen Stellen, wo Wasser eindringen kann, berührungssicher so angeordnet ist, daß eindringendes Wasser zuerst die Sonde und dann erst einen vom Netz gespeisten Leiter benetzt.

9. Elektrische Auslöseeinrichtung nach einem der vorhergehenden Ansprüche, dadurch gekennzeichnet, daß zwischen den Lufteintritts- und Luftaustrittsschutzgittern des Haartrockners und den Stirnseiten der dahinterliegenden Heizspirale je ein Metallflächen- oder Röhrengitter liegt, welches mit der elektrischen Mitte der Heizwicklung verbunden ist.

Fig. 1

Fig. 2

Fig. 3

4

Fig. 4

Fig. 5